# EUROPEAN PATENT SPECIFICATION

(11) **EP 2 571 264 B1**
(45) Date of publication and mention of the grant of the patent: **20.02.2019**
(21) Application number: 11181050.3
(22) Date of filing: 13.09.2011
(51) Int. Cl.: H04N 7/18, G08B 13/196, G06K 9/00

(54) **Method of surveillance for security in public transport**
Verfahren zur Überwachung der Sicherheit im öffentlichen Transport
Procédé de surveillance pour la sécurité dans les transports publics

(43) Date of publication of application: 20.03.2013
(73) Proprietor: Siemens Schweiz AG, 8047 Zürich (CH); Siemens Mobility GmbH, 81739 München (DE)
(72) Inventor: Cloutot, Laurent, 8956 Killwangen (CH); Delianski, Svetlozar, 10713 Berlin (DE)
(74) Representative: Maier, Daniel Oliver

(56) References cited:
- S.A. VELASTIN: "PRISMATICA: a multi-sensor surveillance system for public transport networks", 12TH IEE INTERNATIONAL CONFERENCE ON ROAD TRANSPORT INFORMATION & CONTROL, RTIC 2004, vol. 2004, 1 January 2004 (2004-01-01), pages 19-25, XP55025036, DOI: 10.1049/cp:20040003
- SIJUN LU ET AL: "A Knowledge-Based Approach for Detecting Unattended Packages in Surveillance Video", IEEE INTERNATIONAL CONFERENCE ON VIDEO AND SIGNAL BASED SURVEILLANCE, 2006. AVSS '06, IEEE, 1 November 2006 (2006-11-01), pages 110-110, XP031022070, ISBN: 978-0-7695-2688-1
- SILVIA FERRANDO ET AL: "Classification of Unattended and Stolen Objects in Video-Surveillance System", IEEE INTERNATIONAL CONFERENCE ON VIDEO AND SIGNAL BASED SURVEILLANCE, 2006. AVSS '06, IEEE, 1 November 2006 (2006-11-01), pages 21-21, XP031021981, ISBN: 978-0-7695-2688-1
- BEYNON M D ET AL: "Detecting abandoned packages in a multi-camera video surveillance system", ADVANCED VIDEO AND SIGNAL BASED SURVEILLANCE, 2003. PROCEEDINGS. IEEE CONFERENCE ON 21-22 JULY 2003, PISCATAWAY, NJ, USA,IEEE, 21 July 2003 (2003-07-21), pages 221-228, XP010648388, ISBN: 978-0-7695-1971-5
- LU ET AL: "Detecting unattended packages through human activity recognition and object association", PATTERN RECOGNITION, ELSEVIER, GB, vol. 40, no. 8, 17 April 2007 (2007-04-17) , pages 2173-2184, XP022031742, ISSN: 0031-3203, DOI: 10.1016/J.PATCOG.2006.12.013
- CLAUDIO SACCHI ET AL: "A Distributed Surveillance System for Detection of Abandoned Objects in Unmanned Railway Environments", IEEE TRANSACTIONS ON VEHICULAR TECHNOLOGY, IEEE SERVICE CENTER, PISCATAWAY, NJ, US, vol. 49, no. 5, 1 September 2000 (2000-09-01), XP011064136, ISSN: 0018-9545

## Description

The invention relates to a method of surveillance for enhancing the security of passengers and their private belongings or goods in public transport, especially by means of video surveillance.

Nowadays some means of surveillance are broadly used in the street or at public places with high flow of people for ensuring a higher security against theft, aggression and other possible acts of crime, like leaving a bomb close to a seat in a train. Especially public transportation falls directly under this disease and even in presence of security personnel and cameras at the wayside and on board of units of transport, it is still very difficult to detect and to trace a potential event or a potential risk. This is the reason why today's technology makes use of more intelligent surveillance platforms by enhancing for example the automatic recognition of suspected patterns from video based captures. However even if in some cases an alert can be detected, recognized and transmitted to security personnel for ordering a control at said suspected place, it is generally very and sometimes too late for catching suspect people or their intended action shortly enough after the real detection of a crime or an offense.

As an example of surveillance means for security in public transport, the paper entitled "PRISMATICA: a multi-sensor surveillance system for public transport networks", published in the proceedings of the 12th IEE International Conference on Road Transport Information & Control in 2004, page 19-25, introduced the PRISMATICA tools aimed at providing an "instrumented" detection/ action environment that enables control room operators to obtain timely information to improve personal security (reported and perceived) in public transport sites (in particular, metropolitan railway systems).

As an another example, the paper entitled "A Knowledge-Based Approach for Detecting Unattended Packages in Surveillance Video", published in the proceedings of IEEE International Conference on Video and Signal based Surveillance in 2006, proposed a video surveillance system applying rules for detecting unattended packages.

One general goal to be achieved with this invention is to provide a method of surveillance for security that is based on video surveillance combined with pattern recognition means, especially at place where high passenger flows inhibit a reliable detection as well as a secure tracing of risky scenarios like in public transport (wayside and on-board).

More particularly a proposed method that satisfies the preceding requirement should provide a solution for detecting and tracing efficiently any action related to a theft of personal belongings of passengers as well as related to suspect abandoned objects, especially in a public transportation environment which means out- or/and on-board of public transportation means.

A method of surveillance is hence proposed over the features of claim 1 as a solution for achieving this goal.

Such goal is achieved in providing a method of surveillance for security in public transport locations by means of a network of on-board and wayside located cameras, each of said cameras having communication means to video recording means within a control unit whereby
- a first camera can be automatically initialised to an initial situation
- at least a first camera detects a scenario comprising a person depositing a package in a located zone,
- said first camera triggers a first surveillance mode of the recording means for acquiring a first image data set of said person and of said package,
- said first camera triggers a second surveillance mode of the recording means for a permanent video surveillance of said package in order to estimate its location,
- said first camera emits a request to the control unit to command said first camera and other neighbouring cameras for a periodical tracing of said person in order to estimate his location,
- a distance between locations of said traced person and package is estimated within the control unit,
- an alert is emitted from control unit if at least one of following conditions are confirmed :
   - a) if one of both locations of person and package is at the wayside as the other location is on-board,
   - b) if a displacement of said package - said displacement is relative to the person - is detected over the second survey mode and if the estimated distance is physically greater than a predefined value.

In the first case (a) a typical scenario relies in that a thief has stolen and taken said package out of a transport unit as the owner of said package is still on-board, e.g. at an intermediate rail station of his trip. It is also possible that a person (owner) forgot his package in the transport unit as he left said transport unit. This package may also contain some criminal stuff and will be advantageously detected.
The second case (b) focuses more on a possible theft of package on-board of public transportation like a train/tramway with coupled transport units. Indeed the second survey mode detects a sudden move of the package wherein the mover is not the person that initially deposited the package. A further measurement on the distance between this person and his suddenly moving package is performed in order to deliver and confirm an alert on a real theft, especially if the value of distance is changing (growing) as for example the person is still sitting on his seat and the thief is carrying the stolen package away from the owner, e.g. by going through several transport units/cabins of a train.

As well for case (a) as (b) the method according to the invention provides that the first and neighbouring cameras are spatially distributed over a wayside and on-board infrastructures, ideally at entrance, exits and along a platform of wayside and within cabins of train units. In other words, the survey of package, its owner and a potential thief is not limited to a vision field of the first camera but is dynamically extended to all cameras of transportation environment (on- & out-board), as soon as these cameras detects/recognize said package, its owner or a thief. By this way the method of survey with a network of cameras permits especially a tracing of a stolen or a left package which is very reliable in term of a real-time and spatially broad efficiency of survey.

A further embodiment of the method according to the invention relies in that if said first camera on-board detects a package left on-board and if another camera detects said person at the wayside, the tracing of neighbouring camera are requested to switch on a permanent tracing mode on said person. By this way even if said person to be traced tries to run away, the higher scanning frequency of camera(s) and a redundancy of video captures from different cameras minimize the risk of a loss of tracing.

Under the same goal the method according to the invention provides a step for which if said first camera on-board detects a displacement of package which is caused by a second person, a second image data set of said second person is acquired and compared to initial first image data set of initial person and the tracing of neighbouring cameras are requested to switch on a permanent tracing mode on said package and second person.

The method according to the invention is also included an alert which is emitted to operators' staff over means of communication, that especially are equipped with a video display and an information signal that indicates the image data set and the instantaneous locations of the package (via gps), the initial person and, in case of a theft of package, the second person or at least his face, clothes, etc as well as his displacement within the public transportation environment Such a multiple source of transmitted real-time/spatial/physiognomic information enhances considerably the reliability of retrieving a thief or a left package.

A set of dependent claims presents associated advantages of the method of survey according to the invention.

The described methods are further explained by the following examples and drawings, whereby:
- Drawing 1: an infrastructure of survey means at a public transportation area - on-board and wayside - for implementing the method of survey according to the invention,
- Drawing 2A: a scenario by leaving a package in a transportation unit,
- Drawing 2B: a scenario by a theft of a package from a transportation unit to the wayside,
- Drawing 2C: a scenario by a theft of a package within transportation units.

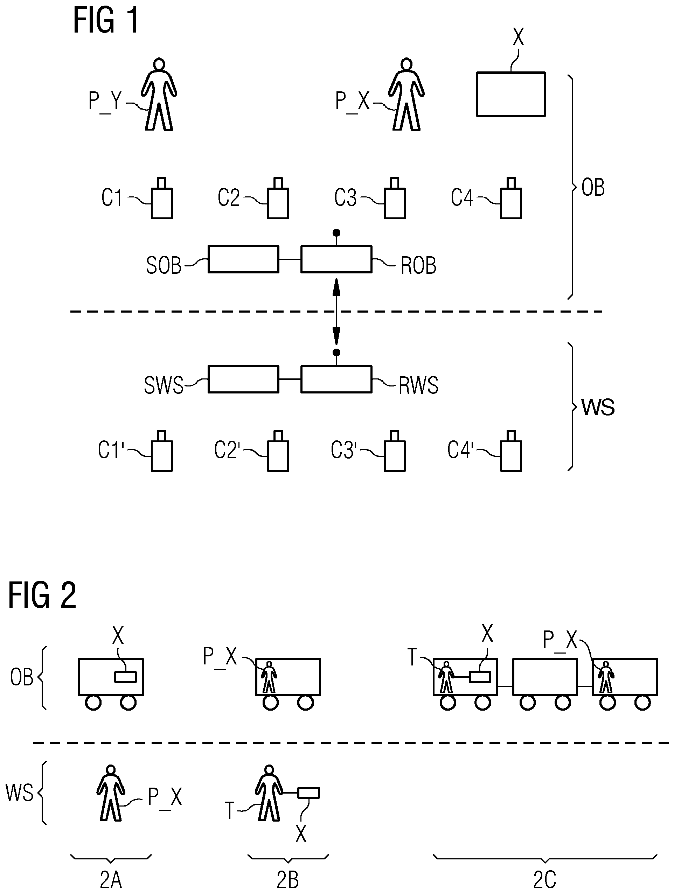

Drawing 1 shows an infrastructure of survey means at a public transportation area comprising an on-board side (OB) (e.g. train units) and a wayside (WS) (rail station platform) and wherein the method of survey according to the invention can be implemented.
Principally the infrastructure relating to the method of surveillance for security in public transport locations comprises means of a network of on-board and wayside located cameras, here a first set of on-board cameras (C1, C2, C3, C4) and a second set of wayside cameras (C1', C2', C3', C4'), each of said cameras and their respective set having communication means to video recording means (ROB, RWS) within a control unit (SOB, SWS). The control units provide also communication paths (e.g. radiofrequency, WiFi, etc.) so that they can exchange video data from their video recording means. This way of communication between the on-board side and the wayside allows advantageously to trace a moving person (as well as a package) at any location of a public transportation area.
The method of surveillance according to the invention provides following steps :
- at least a first camera (e.g. C4) detects a scenario comprising a person (P_X) depositing a package (X) in a located zone (in figure 1, the package is deposited in a train unit where the person P_X is a new passenger); over this step the location of the deposited package within the train unit comprising the camera (C4) is hence known,
- said first camera (C4) triggers a first survey mode of the recording means (ROB) for acquiring a first image data set of said person and of said package,
- said first camera triggers a second mode of the recording means for a permanent video survey of said package in order to estimate its location,
- said first camera emits a request to the control unit (SOB) to command said first camera and other neighbouring cameras for a periodical tracing of said person in order to estimate his location (here this location is on-board); especially if the passenger P_X is walking along the train units, said neighbouring camera (C1, C2, C3) are distributed along all train units,
- a distance between locations of said traced person and package is estimated within the control unit,
- an alert is emitted from control unit if at least one of following conditions are confirmed :
   - a) if one of both locations of person and package is at the wayside as the other location is on-board,
   - b) if a displacement of said package relative to the person is detected over the second survey mode and if the estimated distance is physically greater than a predefined value.

According to the cases a) and b) of drawing 1 three possible scenarios of alert can be detected according to the method of survey.

Drawing 2A presents a first scenario according to case (a) wherein said package (X) is left in a transportation unit of the on-board side (OB) by the passenger (P_X) who is leaving said transportation unit to go the wayside (WS). As the control unit (SWS) is getting from the on-board control unit (SOB) and the camera (C4) a data set of said passenger (P_X) the neighbouring wayside cameras (e.g. C4') at the wayside (WS) said further camera (C1', C2', C3', C4') pursue a periodical recognition and tracing of said person in order to estimate his location at the wayside. By this way the tracing does not stop at the on-board side (OB) and security personnel can be immediately alerted as well as forwarded the picture and location of said person to catch him, especially if his intention was to deposit a suspicious package in the transport unit or if this person has simply and non intentionally forgotten its package by arriving at his trip end station. This principle of alerting could also well run by inverting the on-board and the wayside (package is left at the wayside of a rail station as the owner of said package is going on-board and leaves the rail station).

A further quite analogical scenario could be interpreted in that a person on the wayside is depositing a suspicious package also at the wayside and leaves the wayside without going on-board. For such a situation, the criteria according to case (a) cannot be applied to generate an alert, but the case (b) applies very good as a displacement of package relative the escaping person can be detected over the cameras and a predefined value of distance for triggering the alert could be the length of the wayside at a rail station.

Drawing 2B presents a second scenario according to case (a) or (b) wherein a theft (T) of a package (X) from a transportation unit to the wayside (WS). Like in drawing 2A the locations of said package and its owner (the passenger P_X) are distributed on different sides (on-board and wayside) of the transportation area so that the alert is emitted according to the case (a). Also the alert can also be triggered under the conditions of case (b) as the distance between the package and its owner is (certainly) growing as the thief escapes the transportation area or the platform, that means a simple predefined value of the length of a train of coupled transportation units can be used to trigger the alert according case (b) .

Drawing 2C presents a third scenario wherein a theft (T) of said package (X) realized his theft on-board and displaced/hide the package at a location of transportation units where the owner (P_X) of said package cannot retrieve easily his stolen good. Here the alert according to case (a) cannot run because both persons and said package are at the same side (on-board) of the transportation area. Anyway an alert according to case (b) applies as a relative displacement between the owner and his moving package is detected over the on-board cameras and a predefined value of distance could be set on the length of a train unit (e.g. for example if another passenger, without intention for providing a theft, slightly displaces the package of initial passenger as this one is sleeping).

In resume the method of surveillance according to the invention provides a wide spectrum of dynamic alerting on different scenarios requiring a secure surveillance.

As well the recording means (by corresponding camera's trigger and under a limit of camera acquisition speed) can be commanded to run under permanent or slower like periodically video surveillance of package or persons in order to estimate their location. For a package a higher rate of video surveillance is required because a package can be stolen very fast as for a person a quite slower video rate is needed corresponding to a potential run of said person/thief. Such a variation of speed for the video surveillance permits to avoid any overflow of video data especially in case of dense flows of passengers/packages.

## Claims

1. Method of surveillance for security in public transport locations by means of a network of on-board and wayside located cameras (C1, C2,...; C1', C2', ...), each of said cameras having communication means to video recording means within a control unit (SOB, SWS) whereby
- at least a first camera (C4) detects a scenario comprising a person (P_X) depositing a package (X) in a located zone,
- said first camera triggers a first surveillance mode of the recording means for acquiring a first image data set of said person and of said package,
- said first camera triggers a second mode of the recording means for a permanent video surveillance of said package in order to estimate its location,
- said first camera emits a request to the control unit (SOB) to command said first camera and other neighbouring cameras for a periodical tracing of said person in order to estimate his location,
- a distance between locations of said traced person and package is estimated within the control unit,
- an alert is emitted from control unit if at least one of following conditions are confirmed :
- a) if one of both locations of person and package is at the wayside as the other location is on-board,
- b) if a displacement of said package relative to the person is detected over the second survey mode and if the estimated distance is physically greater than a predefined value.

2. Method according to claim 1, for which the first and neighbouring cameras are spatially distributed over a wayside and on-board infrastructures, ideally at entrance, exits and along a platform of wayside and within cabins of train units.

3. Method according to claim 2, for which if said first camera on-board detects a package left on-board and if another camera detects said person at the wayside, the tracing of neighbouring cameras is requested to switch on a permanent tracing mode on said person.

4. Method according to claim 2, for which if said first camera on-board detects a displacement of package which is caused by a second person, a second image data set of said second person is acquired and compared to initial first image data set of initial person and the tracing of neighbours' camera are requested to switch on a permanent tracing mode on said package and second person.

5. Method according to claim 4, for which an alert is emitted to operators' staff over means of communications, that especially are equipped with a video display and an information signal that indicates the image data set and the instantaneous locations of the package, the initial person and, in case of a theft of package, the second person.

## Patentansprüche

1. Verfahren zur Überwachung der Sicherheit in öffentlichen Transportstandorten durch ein Netzwerk von fahrzeugseitigen und gleisseitig angeordneten Kameras (C1, C2, ...; C1', C2', ...), wobei jede der besagten Kameras Mittel zur Kommunikation mit Videoaufzeichnungsmitteln innerhalb einer Kontrolleinheit (SOB, SWS) besitzt, wobei
- mindestens eine erste Kamera (C4) ein Szenario erkennt in welchem eine Person (P_X) ein Frachtstück in einer lokalisierten Zone deponiert,
- besagte erste Kamera einen ersten Überwachungsmodus der Aufnahmemittel auslöst um einen ersten Bilddatensatz von besagter Person und besagtem Frachtstück aufzunehmen,
- besagte erste Kamera einen zweiten Modus der Aufnahmemittel für eine permanente Videoüberwachung von besagtem Frachtstück auslöst um dessen Standort abzuschätzen,
- besagte erste Kamera eine Aufforderung an die Kontrolleinheit (SOB) aussendet um besagter erster Kamera und anderen benachbarten Kameras anzuordnen besagte Person periodisch zu verfolgen um seinen Standort abzuschätzen,
- eine Distanz zwischen den Standorten besagter Person und Frachtstück innerhalb einer Kontrolleinheit abgeschätzt wird,
- ein Alarm von der Kontrolleinheit ausgesendet wird, wenn mindestens eine der folgenden Bedingungen erfüllt werden:
a) wenn die Position von einer Person gleisseitig ist und die Position eines Frachtstücks fahrzeugseitig ist oder umgekehrt,
b) wenn eine Verschiebung besagten Frachtstücks relativ zu der Person über den zweiten Überwachungsmodus festgestellt wird und wenn die abgeschätzte Distanz physikalisch grösser als ein vorher festgelegter Wert ist.

2. Das Verfahren gemäss Anspruch 1, für welches die erste und die benachbarten Kameras räumlich über gleisseitige und fahrzeugseitige Infrastrukturen verteilt, idealerweise an Eingängen, Ausgängen und gleisseitig entlang eines Bahnsteiges und innerhalb der Abteile von Zugeinheiten, sind.

3. Das Verfahren gemäss Anspruch 2, für welches angefordert wird, dass die Überwachung durch benachbarte Kameras auf einen permanenten Überwachungsmodus von besagter Person schaltet, wenn besagte erste fahrzeugseitige Kamera ein im Fahrzeug gelassenes Frachtstück feststellt und wenn eine andere Kamera besagte Person auf der Gleisseite feststellt.

4. Das Verfahren gemäss Anspruch 2, für welches ein zweites Bilddatenset von besagter zweiter Person erworben wird und mit dem anfänglichen ersten Bilddatenset der anfänglichen Person verglichen wird und die Überwachung der benachbarten Kameras aufgefordert wird auf einen permanenten Überwachungsmodus von besagtem Frachtstück und zweiter Person zu wechseln, wenn besagte erste fahrzeugseitige Kamera eine Verschiebung des Frachtstücks durch eine zweite Person feststellt.

5. Das Verfahren gemäss Anspruch 4, für welches ein Alarm an Mitarbeitende des Anlagebetreibers mithilfe von Mitteln zur Kommunikation ausgesendet wird, welche insbesondere mit einem Videobildschirm und einem Informationssignal ausgestattet sind, welches den Bilddatensatz und den augenblicklichen Standort des Frachtstücks, der anfänglichen Person und, im Falle eines Diebstahls des Frachtstücks, der zweiten Person anzeigt.

## Revendications

1. Procédé de surveillance pour la sécurité dans les transports publics au moyen d'un réseau de caméras embarquées et situées sur le bord des routes (C1, C2, ... ; C' 1, C' 2, ...), chacune desdites caméras possédant des moyens de communication vers des moyens d'enregistrement vidéo à l'intérieur d'une unité de contrôle (SOB, SWS), dans lequel
- au moins une première caméra (C4) détecte un scénario comprenant une personne (P_X) déposant un paquet (X) dans une zone donnée,
- ladite première caméra déclenche un premier mode de surveillance de ces moyens d'enregistrement pour acquérir un premier ensemble de données d'image de ladite personne et dudit paquet,
- ladite première caméra déclenche un second mode des moyens d'enregistrement pour une surveillance vidéo permanente dudit paquet afin d'en estimer sa position,
- ladite première caméra émet une requête à l'unité de contrôle (SOB) de commande de ladite première caméra et des autres caméras voisines pour le traçage périodique de ladite personne afin d'en estimer sa position,
- une distance est estimée à l'intérieur de l'unité de contrôle entre les positions de ladite personne tracée et du paquet,
- une alerte est émise depuis l'unité de contrôle si au moins l'une des conditions suivantes est confirmée :
- a) si l'une des deux positions de la personne et du paquet est sur le bord de la route alors que l'autre position est à bord,
- b) si un déplacement dudit paquet relatif à la personne est détecté par un second mode de surveillance et si la distance estimée est physiquement supérieure à la valeur prédéfinie.

2. Procédé selon la revendication 1 pour lequel la première caméra et les caméras voisines sont réparties spatialement dans des infrastructures embarquées et situées au bord des routes, idéalement, à l'entrée et aux sorties, le long d'une plateforme au bord de la route et à l'intérieur des cabines des wagons.

3. Procédé selon la revendication 2 pour lequel si ladite première caméra embarquée détecte un paquet laissé à bord et si une autre caméra détecte ladite personne au bord de la route, le traçage des caméras voisines est requis pour passer en mode de traçage permanent de ladite personne.

4. Procédé selon la revendication 2 pour lequel si ladite première caméra embarquée détecte un déplacement du paquet causé par une seconde personne, un second ensemble de données d'images de ladite seconde personne est acquis et comparé au premier ensemble de données de l'image initiale de la personne initiale et le traçage des caméras voisines est requis pour passer en mode de traçage permanent dudit paquet et de la seconde personne.

5. Procédé selon la revendication 4 pour lequel une alerte est émise à l'attention des opérateurs par des moyens de communication qui sont spécialement équipés d'un affichage vidéo et d'un signal d'information qui indique l'ensemble des données d'image et les positions instantanées du paquet, de la personne initiale et, en cas de vol du paquet, de la seconde personne.
